# EUROPÄISCHE PATENTSCHRIFT

(11) **EP 2 699 528 B1**
(45) Veröffentlichungstag und Bekanntmachung des Hinweises auf die Patenterteilung: **31.08.2016**
(21) Anmeldenummer: 12720773.6
(22) Anmeldetag: 02.04.2012
(51) Int. Cl.: C04B 18/24, C04B 20/00, C04B 103/46, C04B 28/04, C04B 28/10, C04B 111/28, C04B 111/34

(54) **MÖRTELMISCHUNGEN ENTHALTEND CELLULOSEREGENERATFASERN**
MORTAR MIXTURES CONTAINING REGENERATED CELLULOSE FIBERS
MÉLANGES DE MORTIER COMPRENANT DES FIBRES DE CELLULOSE RÉGÉNÉRÉE

(30) Priorität: 20.04.2011 AT 5612011
(43) Veröffentlichungstag der Anmeldung: 26.02.2014
(73) Patentinhaber: Lenzing AG, 4860 Lenzing (AT)
(72) Erfinder: INNERLOHINGER, Josef, A-4880 Berg im Attergau (AT); SUCHOMEL, Friedrich, A - 4861 Schörfling (AT)
(74) Vertreter: Hanemann, Otto
(86) Internationale Anmeldenummer: PCT/AT2012/000083
(87) Internationale Veröffentlichungsnummer: WO 2012/142631

(56) Entgegenhaltungen:
- KR-A- 20100 035 257
- US-A- 5 897 701

## Beschreibung

Die vorliegende Erfindung beschreibt Mörtelmischungen, die Celluloseregeneratfasern enthalten und sich deshalb durch eine verbesserte Verarbeitbarkeit sowie ein vorteilhaftes Verhalten während der Aushärtung auszeichnen. Die Fasern sind derart beschaffen, dass sie sich speziell zum Einsatz in Mörtelsystemen eignen.

### Stand der Technik:

Mörtel, bestehend aus einer Mischung von Bindemittel (beispielsweise Kalk, Zement oder Lehm), Gesteinskörnung (maximal 4mm Durchmesser) sowie gegebenenfalls Wasser und üblicherweise auch noch weiteren Zusatzstoffen, findet im Baubereich weite Verbreitung. Die Einteilung der Mörtel in verschiedene Klassen kann nach unterschiedlichen Gesichtspunkten erfolgen, wie bespielweise nach der Funktion. Hierbei werden die Mörtel unter anderem in folgende Gruppen eingeteilt: Mauermörtel, Putzmörtel, Fugenmörtel oder Estrichmörtel. Andere Kriterien zur Einteilung sind die nach der Gesteinskörnung oder nach dem verwendeten Bindemittel. Als Beispiel sei die Norm DIN-EN 998-1 angeführt, die Putzmörtel nach Eigenschaften und/oder Verwendungszweck einteilt.

Als Gruppe, die in den letzten Jahren immer mehr an Bedeutung gewinnt, sollen die Kunstharzmörtel hier noch extra angeführt werden. Als Bindemittel dient hier nicht ein mineralisches System, sondern eine Polymerdispersion, beispielsweise basierend hauptsächlich auf Styrol-, Acrylat-, sowie Epoxid- oder Polyesterharzen. Besonders breite Verwendung finden solche Kunstharzmörtel im Bereich der Putze (genormt in der DIN 18 558 Teil 1), da sie sich durch eine einfache Verarbeitung auszeichnen. Bei den immer mehr verbreiteten Wärmedämmverbundsystemen bildet üblicherweise ein Kunstharzputz die oberste Schicht.

Aus dieser Aufzählung ist ersichtlich, dass es eine Vielzahl von unterschiedlichen Putzsystemen gibt, die je nach Anwendungszweck verschiedene Anforderungen erfüllen müssen. Eine häufige Anforderung ist, dass das vorhandene zur Aushärtung nötige Wasser dem Mörtel nicht zu schnell entzogen wird, da dies zu geringeren Festigkeiten führen würde. Diese Gefahr besteht gerade bei (hoch)porösen Baustoffen wie sie in letzter Zeit immer mehr eingesetzt werden. Um diesem Wasserverlust entgegenzuwirken, werden dem Mörtel Mittel zugegeben, die das Wasser länger im Mörtel halten und somit dort zur Verfügung stellen können. Hierzu werden auch Cellulosederivate wie Methylcellulose eingesetzt, die in Wasser löslich sind und neben der Wasserrückhaltung auch der Strukturbildung dienen.

Neben Cellulosederivaten werden auch Zellstoff oder Naturfasern eingesetzt, wobei ein Aspekt wieder die Wasserbindung ist. Daneben sollen die Fasern aber auch verstärkende Wirkung im Mörtel haben - entweder dauerhaft oder nur während der Aushärtung. Beispielsweise offenbart die US 5,897,701 die Verwendung von Zellstofffasern, da sie wenig kosten sollten. Zellstofffasern weisen eine Cellulose-I-Struktur auf. Die als geeignet offenbarten Zellstofffasern sollen eine Länge von 100 - 30.000 µm, einen Durchmesser von 1 - 100 µm und ein L/D-Verhältnis von 30 - 3.000 aufweisen. Ansonsten finden sich in US 5,897,701 keinerlei Hinweise auf Faserabmessungen, nicht einmal im einzigen Ausführungsbeispiel.

Die Bildung von Rissen, vor allem Mikrorissen durch interne Spannungen während der Aushärtung ist ein weiteres mehr allgemeines Problem bei Mörteln. Wie beschrieben werden hier auch bereits Naturfasern eingesetzt, oft aber wegen der höheren Festigkeit bevorzugt synthetische Fasern wie zum Beispiel Polyacrylnitril (PAC).

Neben den eben exemplarisch beschriebenen Zusatzstoffen gibt es noch eine Reihe weiterer Additive. Ein einzelner Mörtel kann aus einer Vielzahl von Komponenten bestehen. Dabei sollte der Mörtel aber noch immer gut zu verarbeiten sein. Das heißt zum Beispiel, dass er eine geeignete Struktur hat, um sich problemlos aufbringen zu lassen. Weiters soll er entsprechend lange verarbeitbar und korrigierbar sein, aber dennoch bereits von Beginn an eine gewisse Festigkeit aufweisen. Putzmörtel soll beispielsweise ein sehr gutes Standvermögen aufweisen. Das bedeutet, dass er sich nach dem Aufbringen (auch in größeren Schichtdicken) nicht absetzen - beispielsweise an einer Wand herunterfließen - soll. Vom praktischen Gesichtspunkt aus ist die einfache Verarbeitbarkeit oft sogar jene Eigenschaft, die über alle anderen Mörteleigenschaften gestellt wird.
KR 2010/0035257 offenbart die Verwendung von Lyocell-Fasern mit einer Länge von 5.000 bis 19.000 µm. Diese Fasern sind sehr lang und daher schlecht dosierbar.

### Aufgabenstellung

Gesucht wurde nun nach einem universellen Zusatzstoff für verschiedene Mörtelsysteme, der sich einfach einbringen lässt und dabei die oben genannten positive Eigenschaften auf sich vereint. Insbesondere sollte es mit Hilfe dieses universellen Zusatzstoffs auch möglich sein, die Rezeptur zu vereinfachen oder zumindest andere Additive einzusparen. Weiters sollte eine gute Verarbeitbarkeit des erhaltenen Mörtels gegeben sein.

### Lösung

Die erfindungsgemäße Lösung dieser Aufgabe ist eine faserhaltige Mörtelmischung, die Celluloseregeneratfasern enthält, die den Strukturtyp Cellulose-II, eine Länge von 100 bis 700 µm und einen Durchmesser von 5 bis 20 µm aufweisen und deren L/D-Verhältnis zwischen 25 und 50 liegt. Als solche geeignete Materialien für multifunktionelle Mörtelzusatzstoffe wurden überraschenderweise Celluloseregeneratfasern identifiziert. Solche Celluloseregeneratfasern, die alle den Strukturtyp Cellulose-II aufweisen, können nach unterschiedlichen Verfahren hergestellt werden. Zu den bekanntesten gehören das Viskose-, das Lyocell- und das Cupro-Verfahren. Die nach diesen Verfahren hergestellten Fasern werden entsprechend als Viskose, Modal bzw. Lyocell bezeichnet. Gemeinsam ist all diesen Verfahren, dass die Cellulose oder ein intermediär hergestelltes Cellulosederivat in einem Lösungsmittel gelöst und anschließend wieder ausgefällt, d. h. regeneriert wird. Falls ein intermediäres Cellulosederivat auftrat, wird dieses dabei wieder zu reiner Cellulose regeneriert. In allen genannten Verfahren erfolgt dabei bekanntermaßen eine Umwandlung vom Strukturtyp Cellulose I zu Cellulose II. Diese beiden Strukturtypen sind mit bekannten Methoden, beispielsweise der Röntgenweitwinkelstreuung eindeutig voneinander unterscheidbar. Die Begriffe "Viskose", "Modal" und "Lyocell" sind die generischen Namen für bestimmte Arten von Celluloseregeneratfasern gemäß der BISFA-Nomenklatur (siehe beispielsweise "Terminology of manmade fibres, Edition 2009").

Celluloseregeneratfasern finden Anwendung vor allem in den Bereichen Textil und Nonwovens, wobei die in diesen Bereichen eingesetzten Fasern zum Einsatz in Mörtel nur bedingt geeignet sind. Da sich die Faserlängen hier typischerweise im Bereich von einigen cm bewegen, lassen sich solche Fasern kaum in Mörtel einmischen, da sich die Fasern nur schlecht im Mörtel verteilen lassen. Durch diese schlechte, inhomogene Verteilung lassen sich die positiven Fasereigenschaften auch nicht auf den Mörtel übertragen, weshalb es bisher zu keinem Einsatz von Celluloseregeneratfasern in diesem Bereich gekommen ist.

Eine für die Erfindung geeignete Form von Celluloseregeneratfasern stellen nun sogenannte Kurzschnittfasern oder auch Flockfasern dar. Beide Fasertypen werden durch Schneiden von Endlosfasern, vereinzelt auch von Kardenbändern o. ä., auf eine eng verteilte Faserlänge gebracht. Bei Kurzschnittfasern liegt diese Faserlänge typischerweise im Bereich von einigen mm bis maximal 10mm. Flockfasern weisen meist eine Länge im Bereich 0,3mm bis etwa 2 mm auf. Es wurde festgestellt, dass die Dosierfähigkeit und Verteilbarkeit der Fasern hier stark von der Faserlänge und vom Faserdurchmesser abhängig ist. Je dicker die Fasern, desto steifer und weniger flexibel sind sie. Somit sind dickere Fasern auch noch bei vergleichsweise langen Faserlängen halbwegs dosierbar und gut verteilbar. Unter dem Gesichtspunkt der Verstärkung, insbesondere der Rissüberbrückung, sind jedoch feinere Fasern wünschenswert.

Eine Möglichkeit, um solche feinen Fasern dosierfähig zu machen und auch eine gute Verteilung im Mörtel zu gewährleisten, ist das Vermahlen von Fasern, wie sie auch für textile Anwendungen eingesetzt werden (Stapelfasern), zu rieselfähigen Pulvern. Dies kann z. B. mit einer geeigneten Schneidmühle passieren. Das resultierende Pulver weist eine Faserlängenverteilung auf. Im Gegensatz zur sehr engen Längenverteilung bei Kurzschnitt und Flock sind die Längen hier über einen breiteren Bereich verteilt. Je nach Anwendung kann eine enge oder breite Verteilung von Vorteil sein. Die erzielbaren Feinheiten bei der Vermahlung hängen wiederum von den verwendeten Ausgangsfasern und der Mühlenkonfiguration ab. Die erzielten mittleren Faserlängen liegen dabei typischerweise im Bereich von einigen 100 µm bis hin zu einigen mm.

Solch entsprechend kurze Fasern lassen sich nun gleichmäßig in verschiedene Mörtelsystemen einbringen, und zwar sowohl in Trocken- als auch in Nassmischungen. Trockenmischung findet üblicherweise bei mineralisch basierten Systemen, d. h. Mörtelmischungen mit mineralischem Bindemittel statt; das benötigte Wasser wird erst auf der Baustelle zugegeben. Kunstharzmörtel werden normalerweise als Polymerdispersion hergestellt, die eventuell vor Anwendung noch etwas verdünnt werden. Solche Mischungen werden als Nassmischungen bezeichnet. Celluloseregeneratfasern, die eine entsprechend kurze Faserlänge aufweisen, lassen sich nun erfindungsgemäß gut in beiden Systemen einbringen, wobei es auch bei Transport und Lagerung zu keiner Auftrennung der Mischungen mehr kommt. Für die Polymerdispersionen wirken die Celluloseregeneratfasern im Gegenteil sogar langzeitstabilisierend und helfen daher mit, das Auftrennen von in Polymer und wässerige Phase zu verhindern, beispielsweise im Behälter bei längerer Lagerung.

Wie bereits oben kurz ausgeführt, sind dünnere Fasern in den erfindungsgemäßen Anwendungen für Verstärkungs- bzw. Armierungszwecke von Vorteil. Das kommt daher, dass bei gleichem Gewichtsanteil bei feineren Fasern im Vergleich zu gröberen deutlich mehr Fasern im Material vorhanden sind. Als Konsequenz ist die Wahrscheinlichkeit größer, dass eine Fehlstelle, z. B. ein beginnender Mikroriss, von einer Faser erfasst wird bzw. auch, dass mehrere Fasern eine Fehlstelle überbrücken.

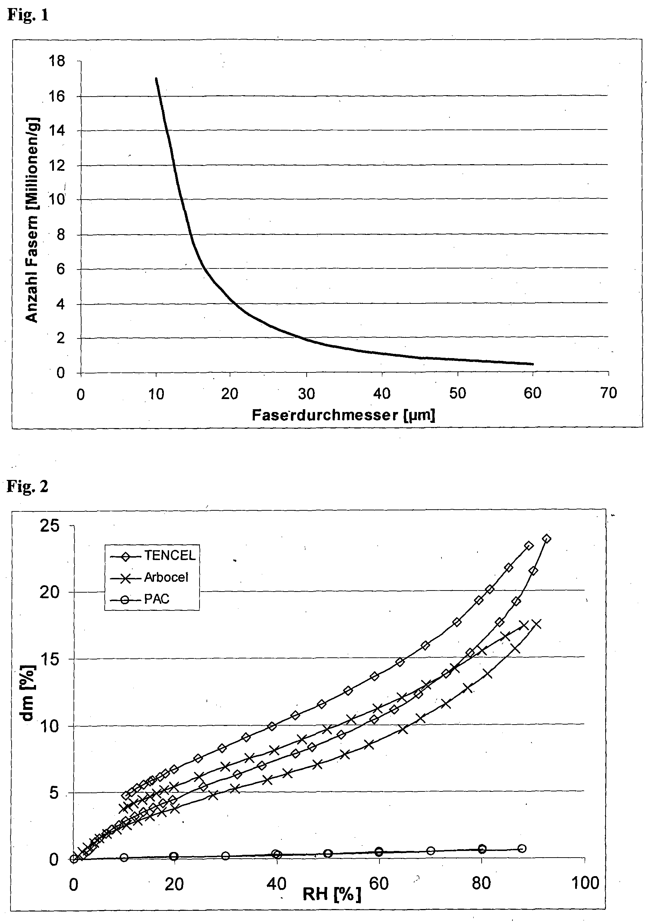

Ein deutlicher Vorteil der Celluloseregeneratfasern ist die erreichbare Faserfeinheit. Für Zellstoff oder Naturfasern liegt der minimale Faserdurchmesser bei etwa 20µm; typische mittlere Werte sind 30µm. Bei Celluloseregeneratfasern sind Durchmesser von 10µm und darunter möglich. Gerade in diesem Bereich, vor allem zwischen 10µm bis 20µm, steigt die Anzahl der vorhandenen Fasern je Gewichtseinheit stark an. Dieses Verhalten ist in Fig. 1 dargestellt - es wurde die Anzahl an Cellulosefasern in einem Gramm bei einer Faserlänge von 500mm berechnet. Neben der Faserfeinheit ist aber auch ein ausreichend großes L/D-Verhältnis wichtig.

Bei der Herstellung von Mörteln wurde nun festgestellt, dass sich die Zugabe von Celluloseregeneratfasern im Vergleich zu den bekannten Additivfasern positiv auf die Eigenschaften des Mörtels auswirkt. Dadurch lassen sich sowohl die Verarbeitung als auch die erzielbaren Mörteleigenschaften verbessern. Überraschenderweise wurde bei diesen Versuchen gefunden, dass Celluloseregeneratfasern die positiven Eigenschaften von Zellstoff (bzw. Naturfasern) und Synthetikfasern vereinen können. Vereinfachend gesagt liefern sie die Festigkeit der synthetischen Fasern, aber gleichzeitig auch das ebenso wichtige Wassermanagement der natürlichen Fasern. In Kombination mit dem sehr guten Einmischverhalten ergeben entsprechend aufbereitete Celluloseregeneratfasern daher ein optimales Additiv zur Verbesserung der Verarbeitbarkeit von Mörteln.

Mörtel, denen erfindungsgemäß geeignete Celluloseregeneratfasern zugesetzt sind, zeichnen sich durch ein sehr gleichmäßiges Auftragverhalten aus. So lassen sich z. B. Putzmörtel einfach gleichmäßig auf der Wand verstreichen. Bewirkt wird dies durch die Celluloseregeneratfasern, die einerseits die rheologischen Eigenschaften des Mörtels positiv beeinflussen, andererseits aber auch ein verbessertes Wassermanagement liefern. Durch Ausrichtung der feinen Fasern unter Scherung lassen sich solche Mörtel gut verstreichen und aufbringen. Danach bildet sich vermutlich wieder ein Fasernetzwerk aus, das die Mörtelschicht stabilisiert, weshalb solche Mörtel ein gutes Standvermögen aufweisen. Es lassen sich dadurch (bei Putzanwendungen) auch in einem Arbeitsgang dickere Mörtelschichten auftragen, wobei sich das gebildete Fasernetzwerk stabilisierend auswirkt. Auch die Eigenschaft der Cellulose zur Wasserspeicherung ist beim gleichmäßigen Aufbringen von Vorteil. Es können zwar auch Cellulosederivate (wie etwa Methylcellulose) Wasser speichern, aber da sich diese Substanzen in Wasser lösen, entsteht dabei eher ein Gel von klebriger und zäher Konsistenz als ein Fasernetzwerk. Dadurch wird ein gleichmäßiges Verstreichen erschwert.

Auch die Rissbindung beim Aushärten der Mörtelschicht wird durch die zugegebenen Celluloseregeneratfasern minimiert. Dadurch, dass Wasser in der Cellulose gebunden ist, steht es dem Mörtel länger zur Aushärtung zur Verfügung. Dadurch erfolgt die Aushärtung gleichmäßiger über einen längeren Zeitraum mit geringerer Rissbildung. Zusätzlich werden Mikrorisse durch die Fasern überbrückt und können sich somit nicht fortsetzen. Dieses Verhalten ist auch noch im erhärteten Mörtel feststellbar. Deutlich feststellbar ist auch, dass die Schlagzähigkeit signifikant erhöht ist. Das ist z. B. wichtig, falls an der Hauswand unter dem Putz eine nachgiebige Isolierung vorhanden ist (wie bei den bereits erwähnten Wärmedämmverbundsystemen). Bälle oder Hagelkörner, die auf die Wand aufprallen, können so den Putz nicht so leicht durchschlagen.

Bevorzugt enthält die erfindungsgemäße Mörtelmischung Celluloseregeneratfasern mit einer Länge L von 100 bis 700 µm, besonders bevorzugt 250 bis 550 µm. Kürzere Längen sind durch vertretbaren Mahlungsaufwand nicht erreichbar. Außerdem wäre bei kürzeren Längen die Schwundrissüberbrückungsfähigkeit beim Trocknen des Mörtels zu gering. Längere Fasern lassen sich nicht mehr homogen verteilen und das Standvermögen des Mörtels verschlechtert sich.

Der Durchmesser D der Celluloseregeneratfasern liegt bevorzugt zwischen 5 und 20 µm, bevorzugt 8 bis 15 µm. Fasern mit kleinerem Durchmesser lassen sich nicht mehr mit wirtschaftlichen Spinnverfahren herstellen; außerdem wären sie lungengängig und damit möglicherweise krebserregend. Der Zusatz von Fasern mit größerem Durchmesser verschlechtert das Standvermögen des Mörtels.

Als besonders bevorzugt hat es sich herausgestellt, dass die Celluloseregeneratfasern in der Mörtelmischung ein L/D-Verhältnis zwischen 25 und 50 aufweisen. Bei kleinerem L/D-Verhältnis sind die Schwundrissüberbrückungsfähigkeit beim Trocknen des Mörtels und das Standvermögen, d. h. die erzielbare Schichtdicke beim Verputzen, zu gering. Bei größerem L/D-Verhältnis: lassen sich die Fasern nicht mehr homogen in den Mörtel einbringen.

Der Anteil der Celluloseregeneratfasern in der erfindungsgemäßen Mörtelmischung sollte im Bereich von 0,1 Gew.-% bis 15 Gew.-%, bezogen auf die Trockenmasse vor dem Vermischen mit Wasser, liegen, bevorzugt im Bereich von 0,1 Gew.-% bis 2,0 Gew.-%.

Es hat sich herausgestellt, dass insbesondere Lyocell-Fasern in der erfindungsgemäßen Mörtelmischung am besten geeignet sind. Vermutlich ist dies durch die höhere Biegesteifigkeit und die damit verbundene kleinere Knäuelbildungsneigung im Vergleich zu Viskose und Cupro begründet. Weitere Gründe könnten der höhere Trocken- und Naßmodul und die bessere Alkalibeständigkeit gegenüber den anderen cellulosischen Materialen sein.

Gegenstand der vorliegenden Erfindung ist weiterhin die Verwendung von Celluloseregeneratfasern zur Herstellung von Mörtelmischungen, wobei die Celluloseregeneratfasern und Mörtelmischungen dabei bevorzugt gemäß den oben genannten Kriterien ausgewählt werden.

### Beispiele

Die im Folgenden angeführten Beispiele dienen zur Erläuterung und Illustration der Erfindung. Die Erfindung ist jedoch nicht nur auf diese Beispiele beschränkt.

Zunächst wurden die Fasern, die als Mörteladditive vergleichen werden sollten, grundlegend charakterisiert. Es handelt sich dabei um folgende Fasern: TENCEL FCP 10/400 (Celluloseregeneratfaser, Lenzing AG), Arbocell PWC 500 (Zellstoff, JRS) und F PAC 235/075 (PAC-Faser, Schwarzwälder Textilwerke). TENCEL FCP 10/400 wurde durch Vermahlung einer Standard Textilfaser (TENCEL 1,3dtex, 38mm) mittels einer Präzisionsschneidmühle (Pallmann PSC) hergestellt. Die anderen beiden Fasern sind kommerziell erhältlich. Tabelle 1 fasst die ermittelten Eigenschaften zusammen. Die Faserdurchmesser wurden optisch mittels Lichtmikroskop und Bildauswertung bestimmt (Olympus BX 51 und analySIS 5.0 von Soft Imaging). Die mittlere Faserlänge wurde mittels MorFI Fiber Analyzer (Techpap) gemessen.

**Tabelle 1**

| | Fasertyp | Durchmesser | mittlere Länge | L/D-Verhältnis |
|---|---|---|---|---|
| TENCELFCP 10/400 | Cellulose II | 10µm | 420µm | 42 |
| Arbocell PWC 500 | Cellulose I | 20µm | 310µm | 16 |
| F PAC 235/075 | Polyacrylnitril | 30µm (Mittelwert breite Verteilung) | 660µm | ∼22 |

Zusätzlich wurde die Wasserdampfsorption nach der volumetrischen Adsorptionsmethode mit dem Gerät BELSORP-max (BEL Inc., Japan) gemessen. Bestimmt wurden sowohl Adsorption als auch Desorption bei 23°C im Druckbereich p/p0 von etwa 0,1 bis 0,9. Die Ergebnisse sind in Fig. 2 dargestellt.

### Beispiel 1

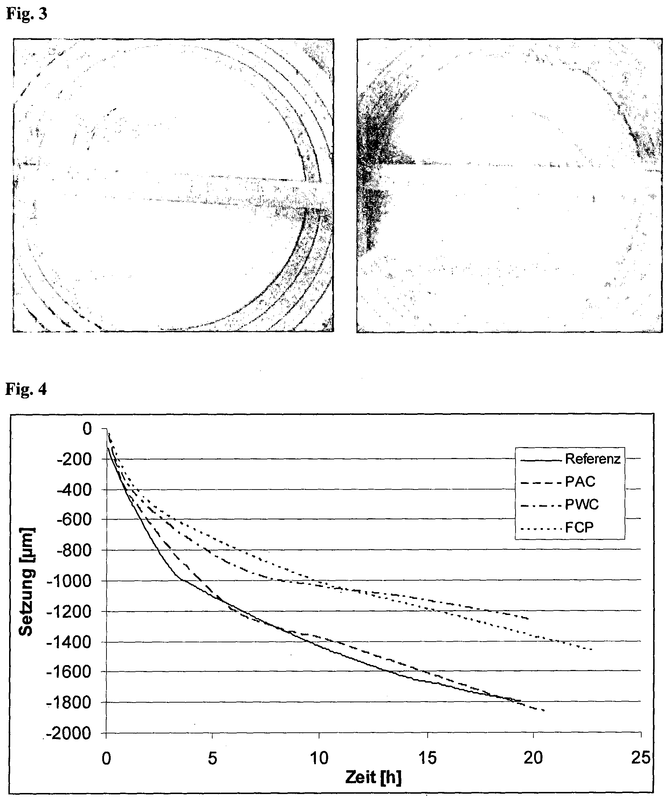

Als Modellsystem für Mörtel wurde ein Gemisch aus 90 Gew.-% Weißkalkhydrat und 10 Gew.-% Zement CEM 42,5 R gewählt, auf Zugabe einer Gesteinskörnung wurde verzichtet um den Effekt der Fasern deutlicher zu machen. Als Fasern wurden verwendet: TENCEL FCP 10/400, Arbocell PWC 500 und F PAC 235/075 wie oben beschrieben. Die Mischungen wurden so hergestellt, dass die fertigen Bindemittelleime jeweils 1 Vol.-% Fasern aufwiesen (auf Feststoff und Wasser) und eine vergleichbare Konsistenz zeigten. Die Zusammensetzung der einzelnen Bindemittelleime ist in Tabelle 2 wiedergegeben. Die Bestimmung der Konsistenz erfolgte nach DIN EN 1015-3 (Ausbreitmaß auf Haegermanntisch), als Sollwert wurde dabei 170mm bis 180mm festgelegt. Fig. 3 zeigt als Beispiel den Vergleich zwischen den ausgebreiteten Leimkuchen mit TENCEL FCP (links) und PAC-Fasern (rechts). Auch wenn das Ausbreitmaß gleich ist, sind doch deutliche Unterschiede in der Struktur zu erkennen. Der Leimkuchen mit TENCEL FCP zeigt eine deutlich einheitliche Struktur als der Leimkuchen mit PAC-Fasern. Beim Leimkuchen mit PAC-Fasern ist auch deutlich Wasser, das sich aus der Masse abgeschieden hat, zu erkennen, was beim Leimkuchen mit TENCEL FCP nicht der Fall ist. Dies zeigt den Vorteil der Erfindung umso deutlicher, als in der Mischung mit TENCEL FCP absolut sogar mehr Wasser enthalten ist. Diese Mischung weist bereits auf die bessere Wasserrückhaltung von Celluloseregeneratfasern hin.

**Tabelle 2**

| | Referenz | PAC | PWC | FCP |
|---|---|---|---|---|
| Kalk | 736g | 736g | 736g | 736g |
| CEM 42,5 R | 82g | 82g | 82g | 82g |
| TENCELFCP 19/400 | - | - | - | 15g |
| Arbocell PWC 500 | - | - | 15g | - |
| F PAC 235/075 | - | 11g | - | - |
| Wasser | 646g | 651g | 676g | 674g |

### Beispiel 2

Anschließend wurde das Verhalten der in Beispiel 1 beschriebenen Bindemittelsysteme während des Erhärtens untersucht. Dazu wurden die Gemische in Kästen mit der Abmessung 300x300x100mm gefüllt und verdichtet. Die Kästen waren mit Deformationssensoren und Kapillardrucksensoren ausgestattet, um die Veränderungen während des Aushärtens zu erfassen. Die Kästen standen während dieser Zeit in einem klimatisierten Raum (20°C, 65% r. H.) und wurden mit einem konstanten Luftstrom (∼0,8m/sec) beaufschlagt.

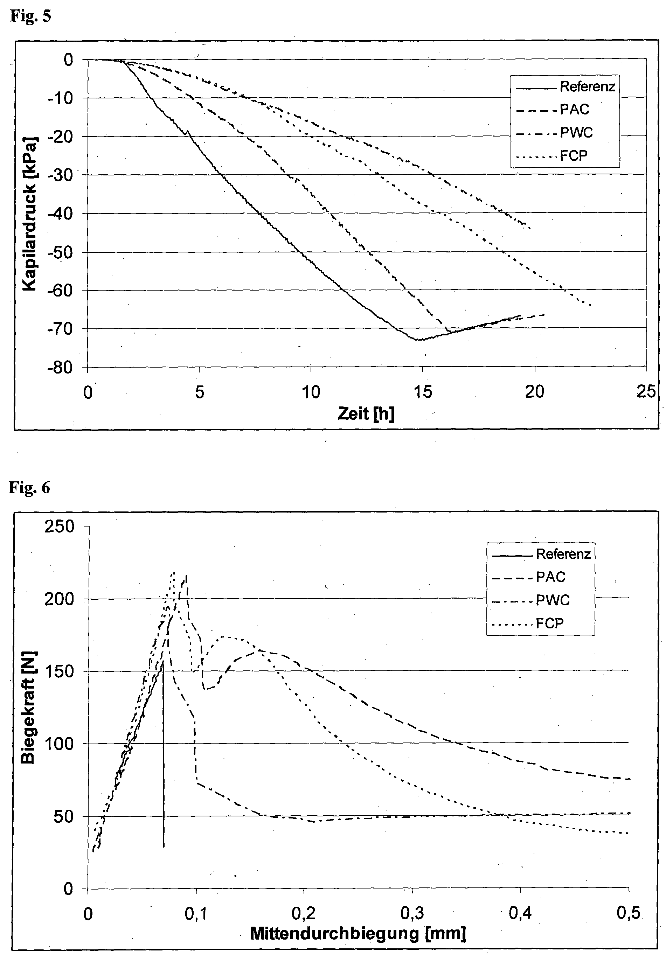

Die dabei gemessene vertikale Deformation (Setzdeformation-Zeit-Kurve) ist in Fig. 4 dargestellt, Fig. 5 zeigt die Entwicklung des Kapillardrucks während derselben Zeit. Deutlich zeigt sich eine Einteilung in zwei Gruppen: Mischungen mit cellulosischen Fasern (FCP & PWC) sowie solche ohne Fasern (Referenz) bzw. mit synthetischen Fasern (PAC). Die geringere Setzung und die langsamere Abnahme des Kapillardrucks sind auf die durch die Cellulose bedingte bessere Wasserrückhaltung zurückzuführen. Dieses Wasser steht somit auch dem Bindemittel zum Aushärten zur Verfügung, was ein gleichmäßigeres Härten bewirkt. Besonders deutlich wird dies in Fig. 5, wo nach etwa 15 h der Kapillardruck für die Referenz und die PAC-Probe wieder ansteigt. Dies ist ein Anzeichen für Rissbildung im aushärtenden Mörtel, was zu einer unregelmäßigen Oberfläche führt.

### Beispiel 3

Zur Prüfung der Eigenschaften der ausgehärteten Systeme wurden Prismen der Abmessung 160x40x40mm aus den in Beispiel 1 beschriebenen Bindemittelleimen hergestellt. Diese Prismen wurden vor der Prüfung 21 Tage in einem Klimaraum (20°C, 65% r. H.) gelagert, davon die ersten 48h in der Form. Danach wurde die Biegezugfestigkeit in Anlehnung an DIN EN 1926 mit einer mechanischen Zug-Druck-Prüfmaschine (Z1445) gemessen. In Fig. 6 sind zum Vergleich einzelne Kraft-Durchbiegungskurven dargestellt; aufgetragen ist die Kraft gegen die Durchbiegung in der Mitte der Prismen. Die Referenzprobe ohne Fasern zeigt das typische Verhalten spröder, mineralischer Baustoffe. Nach einer nahezu linear-elastischen Verformung erreicht die Zugspannung am unteren Rand der Probe die Zugfestigkeit des Materials. Dadurch entsteht ein von unten ausgehender Makroriss aus den zuvor auftretenden Mikrorissen, der die Probe schnell durchläuft und zerteilt. Bei den Proben mit Fasern ist das Verhalten bis zum Erreichen der Biegezugfestigkeit vergleichbar (eine typische linear-elastische Verformung), jedoch werden höhere Bruchkräfte als in der Referenzprobe erreicht. Das ist auf die Behinderung der Mikrorissbildung durch die Fasern zurückzuführen. Auch nach der Ausbildung des Risses können die Fasern noch Zugkräfte über den Makroriss übertragen und somit das schlagartige spröde Versagen der Probe verhindern. Zellstoff kann das Versagen nur geringfügig hinauszögern und die PAC-Fasern am längsten. TENCEL FCP liegt hier näher an der synthetischen Faser als an der nativen Cellulosefaser. Dies zeigt sich auch an der gemessenen Energiedissipation bis zur Mittendurchbiegung von 0,4mm. Die Mittelwerte aus jeweils drei Messungen sind in Tabelle 3 zusammengefasst.

**Tabelle 3**

| | Biegezugfestigkeit [MPa] | Mittendurchbiegung bei Biegezugfestigkeit [mm] | Energiedissipation bis zur Mittendurchbiegung von 4mm [Nmm] |
|---|---|---|---|
| Referenz | 0,38 | 0,069 | 5,7 |
| PWC | 0,50 | 0,082 | 21,6 |
| FCP | 0,55 | 0,077 | 41,7 |
| PAC | 0,48 | 0,082 | 46,8 |

Die obigen Beispiele verdeutlichen die Vorteile, die der Zusatz von Celluloseregeneratfasern wie beispielsweise TENCEL FCP bei der Verarbeitung von Mörtel bringt. Aber auch im ausgehärteten Mörtel weisen sie noch zusätzliche positive Effekte auf. So ist z. B. von Kühlelementen, die auf dem Prinzip von Kapillarmatten in der Wand arbeiten, bekannt, dass sie gerade im Sommer bei hohen Temperaturen nicht die erhoffte Kühlwirkung bringen können. Da es hier aufgrund Erreichens der Taupunkttemperatur zu Kondenswasserbildung kommt, müssen solche Anlagen stark gedrosselt bzw. sogar abgeschaltet werden. Durch die Wasseraufnahmekapazität von Cellulosefasern (für TENCEL gezeigt in Fig. 2) kann mehr Wasser abgepuffert und die Leistungsfähigkeit von Kapillarkühlsystemen damit verbessert werden. Für diesen Anwendungsfall ist der Einsatz einer höheren Menge Fasern nötig als dies nur für die oben beschriebene Verbesserung der Verarbeitbarkeit nötig wäre.

Ein weiterer Vorteil der erfindungsgemäßen Verwendung von Celluloseregeneratfasern als Additiv für Mörtel ist die Modifizierbarkeit der Celluloseregeneratfasern. So lassen sich je nach Verfahren unterschiedliche Substanzen in die Celluloseregeneratfasern inkorporieren. Dadurch muss in der Formulierung statt zwei oder mehr Substanzen nur mehr eine Substanz zugegeben werden und das inkorporierte Material wird gleichzeitig mit den Fasern gleichmäßig in der Matrix verteilt. Als Beispiel sei photokatalytisches Titandioxid angeführt, das bereits in Bauanwendungen Verwendung findet und sich problemlos in die Celluloseregeneratfasern einarbeiten lässt. In gleicher Weise lassen sich auch eher inkompatible Substanzen in die Mörtelmatrix einbringen. Dies kann soweit gehen, dass die Celluloseregeneratfaser primär als Träger für andere, in den Mörtel einzubringende Substanzen fungiert und dies wichtiger wird als die Verstärkungswirkung.

Auch wenn die Zugabe von Celluloseregeneratfasern zum Mörtel vor allem auf eine bessere Verarbeitbarkeit abzielt und dies auch die hauptsächliche Verbesserung ist, soll ein weiterer Nebeneffekt nicht unerwähnt bleiben. Es ist bekannt, dass sich organische Fasern positiv auf das Brandverhalten von Mörtel und Beton auswirken. Da solche Fasern im Brandfall schon frühzeitig schmelzen bzw. verbrennen, schaffen sie ein Porensystem, durch das das verdampfende Wasser entwichen kann. Ansonsten könnte dieser Dampf zum Abplatzen ganzer Schichten von Mörtel bzw. Beton führen. Dieser Brandschutzeffekt wird selbstverständlich auch durch die Celluloseregeneratfasern generiert.

## Patentansprüche

1. Faserhaltige Mörtelmischung, **dadurch gekennzeichnet, dass** sie Celluloseregeneratfasern enthält, die den Strukturtyp Cellulose-II, eine Länge von 100 bis 700 µm und einen Durchmesser von 5 bis 20 µm aufweisen und deren L/D-Verhältnis zwischen 25 und 50 liegt.

2. Mörtelmischung gemäß Anspruch 1, wobei die Celluloseregeneratfasern aus der Gruppe enthaltend Viskose, Modal oder Lyocell ausgewählt sind.

3. Mörtelmischung gemäß Anspruch 1, wobei die Celluloseregeneratfasern eine Länge von 250 bis 550 µm und einen Durchmesser von 8 bis 15 µm aufweisen.

4. Mörtelmischung gemäß Anspruch 1, wobei der Anteil der Celluloseregeneratfasern im Bereich von 0,1 Gew.-% bis 15 Gew.-% , bevorzugt von 0,1 Gew.-% bis 2,0 Gew.-%, bezogen auf die Trockenmasse des Mörtels vor dem Vermischen mit Wasser liegt.

5. Mörtelmischung gemäß Anspruch 1, wobei die Celluloseregeneratfasern bevorzugt Lyocell-Fasern sind.

6. Verwendung von Celluloseregeneratfasern gemäss Anspruch 1 zur Herstellung von Mörtelmischungen.

## Claims

1. A fiber-containing mortar mixture **characterized in that** it contains regenerated cellulose fibers having cellulose II-type structure, a length from 100 to 700 µm, and a diameter from 5 to 20 µm, and whose L/D ratio is between 25 and 50.

2. The mortar mixture as claimed in claim 1, wherein the regenerated cellulose fibers are selected from the group comprising viscose, modal and lyocell.

3. The mortar mixture as claimed in claim 1, wherein the regenerated cellulose fibers have a length from 250 to 550 µm and a diameter from 8 to 15 µm.

4. The mortar mixture as claimed in claim 1, wherein the content of regenerated cellulose fibers is in the range from 0.1% by weight to 15% by weight, preferably from 0.1% by weight to 2.0% by weight, related to the dry matter of the mortar prior to mixing with water.

5. The mortar mixture as claimed in claim 1, wherein the regenerated cellulose fibers are preferably lyocell fibers.

6. The use of regenerated cellulose fibers as claimed in claim 1 for the preparation of mortar mixtures.

## Revendications

1. Mélange de mortier contenant des fibres, **caractérisé en ce qu'**il contient des fibres de cellulose régénérée qui présentent une structure de cellulose de type II, une longueur comprise entre 100 et 700 µm et un diamètre compris entre 5 et 20 µm, et dont le rapport UD est compris entre 25 et 50.

2. Mélange de mortier selon la revendication 1, les fibres de cellulose régénérée étant choisies dans le groupe comprenant la viscose, le modal et le lyocell.

3. Mélange de mortier selon la revendication 1, les fibres de cellulose régénérée présentant une longueur comprise entre 250 et 550 µm et un diamètre compris entre 8 et 15 µm.

4. Mélange de mortier selon la revendication 1, la part de fibres de cellulose régénérée étant comprise entre 0,1 % en masse et 15 % en masse, de préférence entre 0,1 % en masse et 2,0 % en masse, rapportée à la matière sèche du mortier avant de le mélanger à de l'eau.

5. Mélange de mortier selon la revendication 1, les fibres de cellulose régénérée étant de préférence des fibres lyocell.

6. Utilisation de fibres de cellulose régénérée selon la revendication 1 pour la fabrication de mélanges de mortier.
